# EUROPEAN PATENT SPECIFICATION

(11) **EP 1 473 190 B1**
(45) Date of publication and mention of the grant of the patent: **23.11.2005**
(21) Application number: 03076349.4
(22) Date of filing: 02.05.2003
(51) Int. Cl.: B60Q 1/30, B60Q 11/00

(54) **Detection of trailer presence and type by means of current detection**
Erkennung von Anhängeranwesenheit und -typ durch Stromdetektion
Détection de la présence d'une remorque et de son type par détection de courant

(43) Date of publication of application: 03.11.2004
(73) Proprietor: VOLVO LASTVAGNAR AB, 405 08 Göteborg (SE)
(72) Inventor: Petersson, Christer, 443 42 Grabo (SE)
(74) Representative: Schlossman, Ulf

(56) References cited:
- DE-A- 3 616 506
- DE-A- 10 107 578
- DE-A- 19 950 851
- DE-C- 19 708 659

## Description

### TECHNICAL FIELD

The present invention relates to a device for detecting the presence and type of a trailer which may have been connected to a vehicle, and also to a method for carrying out such detection; according to the preamble of claims 1 and 7.

By means of the invention, trailers with different types of sub systems, such as for example light systems, can be detected, as well as the total absence of any trailer.

### BACKGROUND ART

When connecting a trailer to a vehicle, it is often important for different kinds of systems and components in the vehicle to be aware of the trailer, in order to ensure proper operation of the vehicle. This is true for such systems as, for example, automatic gear boxes, the brake system and the light system, which apply different kinds of automated programs depending on the presence or absence of a trailer.

The detection of the presence or absence of a trailer is of particular importance for trucks and thus for truck drivers, but can also be important for drivers of ordinary vehicles when attaching trailers, campers, caravans and the like.

Conventionally, detecting the absence or presence of a trailer has been carried out by measuring the current which goes to the light system of the trailer, a current which is conventionally fed via a power line attached to the vehicle. Since conventional trailers have lamps of the conventional kind, the current consumed by the light system of the trailer has been quite high, thus making it easy to detect the presence or absence of a trailer by measuring the current in an outlet of the vehicle for a power line to a trailer, and comparing the level of said current to a known threshold. In addition, since the currents are as high as they are, the measurement has been possible to carry out by means of components which have a rather poor resolution, making the components and also the measurement inexpensive.

Such a device is disclosed in DE 19950851.

Recently, however, vehicles and trailers have begun using lights equipped with Light Emitting Diodes, LED:s. One property of such diodes is that they consume a minimal amount of power compared to conventional lights. This is advantageous in many ways, but it makes the detection as explained above difficult or impossible, since the amount of power consumed by a trailer equipped with LED-lights involves currents which will not be above the threshold for conventional lights, and might not even be at a level which is even theoretically possible to detect with the kinds of components used.

Thus, if a vehicle has a trailer connected and the trailer is equipped with LED:lights, the systems in the vehicle which use information regarding the presence or absence of a trailer will receive erroneous information.

### DISCLOSURE OF THE INVENTION

There is thus, as has been explained above, a need for a device and a method by means of which it is possible to detect the presence of a trailer which may have been connected to a vehicle, and also to detect the type of trailer, so that the presence of any type of trailer will lead to detection by the vehicle.

This need is addressed by the present invention in that it comprises means for applying a first voltage to a first amount of power lines for a first sub system in the trailer and means for measuring the individual currents consumed by components in said first sub system, including means for comparing the level of said individual currents to a first predefined threshold.

In addition, the device comprises means for applying a second voltage to a second amount of power lines in the first sub system in the trailer, and means for measuring the total current in said second amount of power lines.

The device also comprises means for comparing the total current in the second amount of power lines to a second threshold, and decision making means adapted to decide which kind of trailer if any that is connected to the vehicle, based on said measured currents.

Thus, by means of the invention, a device is disclosed which can detect the attachment of a trailer to a vehicle regardless of the type of lights the trailer is equipped with. This is due to the fact that the device can first detect the current in one of the power lines, i.e. the current to one of the lights. If the lights are of the conventional type, the level of the current will be sufficient to enable detection in the conventional way.

If no trailer is detected in the conventional way, the device according to the invention can apply a voltage to a group (the second amount) to measure the current going to that group. Since the measurement involves the current to a group of devices, e.g. lights, the currents involved will be sufficiently high to allow a dependable detection.

The voltage applied to the second group can be the same voltage, i.e. not just identical in level but the same pulse as that applied initially to detect conventional lights, or it can be a separate voltage pulse applied after the device has decided that no conventional lights are used.

The invention also discloses a method for use of a device according to the invention.

### BRIEF DESCRIPTION OF THE DRAWINGS

The invention will be described in more detail below, with reference to the appended drawings, in which
Fig 1 shows an embodiment according to the prior art, and
Fig 2 shows a first embodiment of a device according to the invention, and
Fig 3 shows a second embodiment of a device according to the invention, and
Fig 4 shows a third embodiment of a device according to the invention.

### EMBODIMENTS

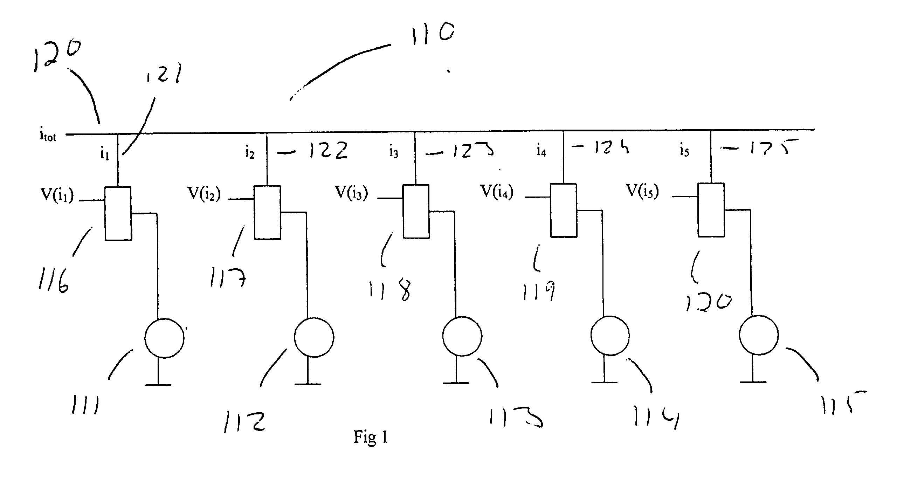

Fig 1 shows an arrangement according to the prior art: a trailer is attached to a vehicle, and in order to ensure power supply to a subsystem 110 in the trailer, a power cord 120 from the trailer is attached to a corresponding outlet in the vehicle.

From now on, the subsystem 110 in the trailer will be described as being the light system of the trailer. It should however be understood that this is merely for the sake of clarity and ease of understanding, the device according to the present invention can be applied to virtually any subsystem which uses a power feed from a vehicle to a trailer.

Returning now to fig 1, the light system comprises a plurality - in the example shown five - components, i.e. lights, 111-115. The power supply and thus the current, i₁-i₅, to each light from the main power line is controlled by a control component 116-120, preferably a power FET-transistor. Each of the control components is also equipped with a "measuring port", i.e. a port or connection possibility where the component applies an output voltage V(ᵢ) which is proportional to the current that passes through the control component.

Thus, when there is a need for detecting if a trailer is attached to the vehicle in question, a (not shown) control component in the vehicle applies a first voltage to the power cable 120 leading to the trailer, and controls each control component 116-120 to let current flow to the lights 111-115 through individual power lines 121, 122, 123, 124, 125 leading to each individual lamp. Thus a voltage is here applied to a first amount of power lines, the first amount in this example being the total amount of power lines 121-125.

The same, or another, control component in the vehicle then measures the mentioned output voltage for each FET 116-120, and can thus get a good and reliable measurement of the current consumed by each of the lights. If the lights are of the conventional type, the currents involved will be rather large, thus making the measurement easy. Typically, the initial current for one conventional light can be as high as 10 A, and in a steady state the current consumption is around 1 A. By detecting if the current consumed by one or more of the lights is above a first predefined threshold limit, the control unit in the vehicle can detect the presence or absence of a trailer. Preferably but not necessarily, the presence of a current above said threshold is required in at least two lights, in order to minimise the risk of errors due to, for example, short circuits or current leakage.

If there is a trailer attached to the vehicle, the application of a test voltage to the lights will turn on the lights, which in turn will cause blinking. In order to minimise this, the test voltage is only applied at certain specified points in time, for example, when the parking brake is released, or the vehicle is started or when the lights are turned on by the driver, or any combination of these and other specified events.

As stated previously, since the power consumed by conventional lights is rather high, the FET:s or control components 116-120 can be of an inexpensive kind, which only allows for measuring rather high current levels, due to, for example, the control components having an "offset" current which is typically about 0.5 A. However, if a trailer which is attached is equipped with lights of the more modern LED-kind, (Light Emitting Diodes), the power levels involved will be lower, thus leading to the detection of "absence" of a trailer, although a trailer is in fact attached to the vehicle.

Needless to say, the erroneous detection of the "absence" of a trailer will lead to a number of inconveniences and problems for the driver of the vehicle.

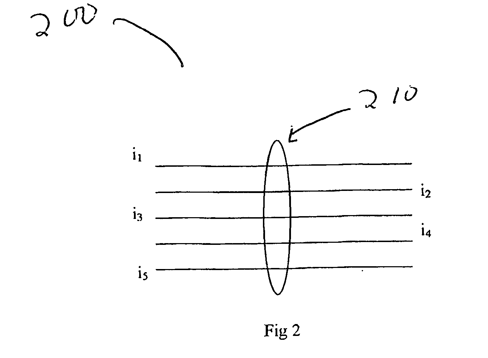

Fig 2 very schematically shows a first embodiment of a device 200 according to the invention. Since the basic problem to be solved by the invention is due to the fact that the lights of the LED-type consume less power than conventional lights, one way of enabling detection of the presence of a trailer by detecting power consumption by means of current detection would be by measuring the total current passing though a plurality of power lines to the different lights when a voltage is applied to said plurality of power lines.

The device 200 very schematically shown in Fig 2 does exactly this: when a voltage, which in this embodiment can be the same voltage as that applied to detect lights of a traditional kind, or a separate voltage pulse, is applied to the power line leading to the trailer, the device according to the invention is equipped with a means 210 for measuring the total current in a second amount of power lines, in this case all of the power lines leading to the individual lights 111-115. In connection with the voltage pulse applied, the control means, the FET:s are controlled to allow current to flow to the lights. The means 210 according to this embodiment of the invention is suitably one which can be fitted to the power system or power lines externally, for example a device which uses the induction principle for measuring current.

By means of a not shown device, the level of the current detected by the detection means is compared to a second threshold, where the second threshold is adapted to levels appropriate for the detection of LED-lights. The outcome of the comparison is used by - also not shown - decision making means in the device of the invention in order to decide which kind of trailer, if any, that is attached to the vehicle.

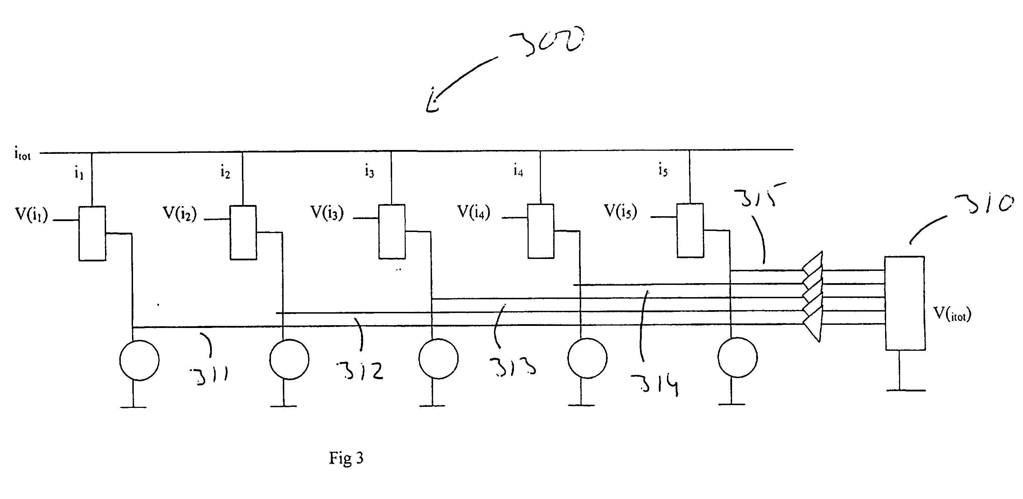

In fig 3, a second embodiment of a device 300 according to the invention is shown: This device can be used internally in the power system of the vehicle or the trailer, and comprises separate control means 310, preferably a power FET-transistor, for use as a switch. By means of the switch 310, suitably controlled by a not shown control means, a voltage is applied to separate lines 311-315 from the switch to the individual lights in the system, which is done by individual connections or power lines from the FET to each of the lights in the system, that is to a second amount of power lines, with each of the connections from the FET 310 to the individual lights suitably comprising a diode. In this embodiment, said second amount equals the total amount of power lines.

In this way, if the detection in the traditional way described above with reference to fig 1 does not indicate the presence of a trailer, the control means controlling the FET 310 can apply a second voltage to the FET 310, and control the FET to switch "on" the current to the individual lights. In similarity to the FET:s described with reference to fig 1, the FET or control means 310 comprises a port for an output voltage which is in proportion to the current which passes through the FET 310. It is thus easy to detect the total current passing to the lights from the FET, and also easy for a control means to compare this total current to a second threshold, with the second threshold being adapted for the detection of LED-lights.

The control means or FET 310 used in this embodiment for applying the second voltage doesn't need to be as tolerant of large currents as the other FET:s shown in fig 1, since the FET 310 need only admit current levels used by LED:s. This makes the embodiment shown in fig 3 inexpensive.

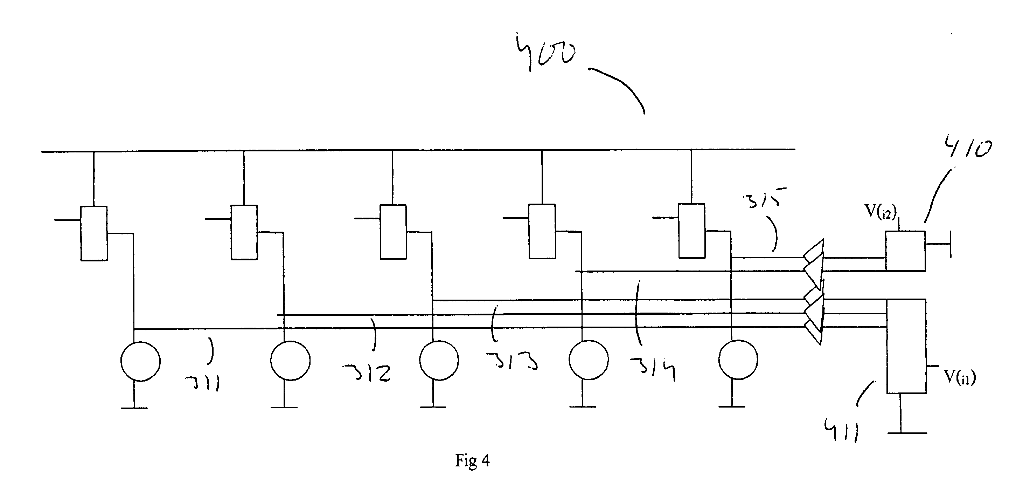

Finally, fig 4 shows a third embodiment of a device 400 according to the invention: in order to increase the resolution of the detection principle shown in fig 3, the device according to the invention can be equipped with means 410, 411 for applying the second test voltage to only a group of the components or lights in the presumed trailer. In order to achieve this, the lights can, for example, be arranged into two groups, with the components (lights) in each group having individual power lines. However, the power lines to one and the same group get their power feed from an individual control means 410,411, for that group, suitably a FET of the same kind used in the embodiment of fig 3.

The (not shown) control means which control the detection can then apply a second voltage to each of the individual FET:s if, for example, the first voltage applied does not show the presence of traditional lights, as described in connection to fig 1. The embodiment of fig 4 might increase the cost somewhat compared to fig 3, but it also gives greatly enhanced resolution and reliability. In addition, the individual control means 410, 411, for the different groups need only withstand smaller amounts of power, thus making it possible to use less expensive components.

Preferably, when choosing how to arrange the lights into different groups as shown in fig 4, the grouping is done according to the sensitivity of the components, so that all the components (lights) which are deemed the most important are not arranged into one and the same group.

Finally, one embodiment of the invention which has not been shown in the figures can be mentioned: the embodiment shown in fig 2 shows the measurement of the total current drawn by the lights in the presume trailer, by means of measuring the current in the power line going to the trailer. It would be equally possible to carry out this measurement on the ground cable from the trailer.

## Claims

1. A device (200, 300, 400) for detecting the presence and type of trailer which may have been connected to a vehicle, said device comprising means for applying a first voltage to a first amount of power lines (121, 122, 123, 124, 125) for a first sub system in the trailer and means for measuring the individual currents (i₁, i₂, i₃, i₄, i₅) consumed by components (111, 112, 113, 114, 115) in said first sub system, including means for comparing the level of said individual currents to a first predefined threshold, **characterised in that** the device additionally comprises means for applying a second voltage (310; 311, 312, 313, 314, 315) to a second amount of power lines in the first sub system in the trailer, and also means (310) for measuring the total current in said second amount of power lines, with means for comparing the total current in the second amount of power lines to a second threshold, and decision making means adapted to decide which kind of trailer if any that is connected to the vehicle, based on said measured currents.

2. The device of claim 1, in which the means for applying the second voltage (310, 410) is only activated if the individual current consumed by the components in the first sub system is below the level of said first predefined threshold.

3. The device of claim 2, in which the means (310) for applying the second voltage applies said second voltage to each of the individual components (111, 112, 113, 114, 115) in the subsystem.

4. The device of claim 2, in which the means (410, 411) for applying the second voltage applies said second voltage to at least one group of components in the subsystem.

5. The device (200) of claim 1, in which the application of the first voltage is also used as said second voltage, with the second amount of power lines being the total amount of power lines to the sub system.

6. The device of any of the previous claims, in which the sub system which is used is the light system of the trailer.

7. A method for detecting the presence and type of trailer which may have been connected to a vehicle, said method comprising the step of applying a first voltage to a first amount of power lines for a first sub system in the trailer and measuring the individual currents consumed by components in said first sub system, further including the step of comparing the level of said individual currents to a first predefined threshold, **characterised in that** the method additionally comprises the step of applying a second voltage to a second amount of power lines in the first sub system in the trailer, and measuring the total current in said second amount of power lines, with a comparison of the total current in the second amount of power lines to a second threshold, and making a decision to decide which kind of trailer if any that is connected to the vehicle, said decision being based on said measured currents.

8. The method of claim 7, according to which the second voltage is only applied if the individual current consumed by the components in the first sub system is below the level of said first predefined threshold.

9. The method of claim 8, according to which the second voltage is applied to each of the individual components in the subsystem.

10. The method of claim 8, according to which said second voltage is applied to at least one group of components in the subsystem.

11. The method of claim 7, according to which the first voltage is also used as said second voltage, with the second amount of power lines being the total amount of power lines to the sub system.

12. The method of any of claims 7-11, in which the sub system which is used is the light system of the trailer.

## Patentansprüche

1. Einrichtung (200, 300, 400) zum Feststellen des Vorhandenseins und der Art eines Anhängers, der mit einem Fahrzeug verbunden worden sein kann, wobei die Einrichtung Mittel zum Anlegen einer ersten Spannung an eine Anzahl von Stromleitungen (121, 122, 123, 124, 125) für ein erstes Untersystem in dem Anhänger und Mittel zum Messen der individuellen Stromstärken (i₁, i₂, i₃, i₄, i₅), die von den Komponenten (111, 112, 113, 114, 115) in dem ersten Untersystem verbraucht werden, aufweist, wobei Mittel zum Vergleichen der Höhe der einzelnen Stromstärken mit einem vorher festgelegten Grenzwert vorgesehen sind,
**dadurch gekennzeichnet,**
**dass** die Einrichtung zusätzlich Mittel zum Anlegen einer zweiten Spannung (310, 311, 312, 313, 314, 315) an eine zweite Anzahl von Stromleitungen in dem ersten Untersystem des Anhängers und weiterhin Mittel (310) zum Messen der Gesamtstromstärke in der zweiten Anzahl von Stromleitungen mit Mitteln zum Vergleichen der Gesamtstromstärke in der zweiten Anzahl von Stromleitungen mit einem zweiten Grenzwert und Entscheidung treffende Mittel aufweist, die basierend auf den gemessenen Stromstärken entscheiden, welche Art von Anhänger, wenn vorhanden, mit dem Fahrzeug verbunden ist.

2. Einrichtung nach Anspruch 1, wobei das Mittel zum Anlegen der zweiten Spannung (310, 410) nur dann aktiviert ist, wenn die einzelne Stromstärke, die von den Komponenten in dem ersten Untersystem verbraucht wird, unter der Höhe der ersten vorher festgelegten Grenze liegt.

3. Einrichtung nach Anspruch 2, wobei das Mittel (310) zum Anlegen der zweiten Spannung die zweite Spannung an jede einzelne Komponente (111, 112, 113, 114, 115) in dem Untersystem anlegt.

4. Einrichtung nach Anspruch 2, wobei die Mittel (410, 411) zum Anlegen der zweiten Spannung die zweite Spannung an mindestens eine Gruppe von Komponenten in dem Untersystem anlegt.

5. Einrichtung (200) nach Anspruch 1, wobei die Anwendung der ersten Spannung auch als zweite Spannung genutzt wird, wobei die zweite Anzahl von Stromleitungen die Gesamtanzahl von Stromleitungen des Untersystems ist.

6. Einrichtung nach einem der vorhergehenden Ansprüche, wobei das Untersystem, das eingesetzt ist, das Lichtsystem des Anhängers ist.

7. Verfahren zum Feststellen des Vorhandenseins und des Typs eines Anhängers, welcher mit einem Fahrzeug verbunden worden sein kann, wobei das Verfahren den Schritt aufweist, eine erste Spannung auf eine erste Anzahl von Stromleitungen für ein erstes Untersystem des Anhängers anzulegen und die einzelnen Spannungen, die von Komponenten in dem ersten Untersystem verbraucht werden, zu messen, ferner den Schritt, die Höhe der einzelnen Spannungen mit einem vorher festgelegten Grenzwert zu vergleichen,
**dadurch gekennzeichnet,**
**dass** das Verfahren weiterhin den Schritt aufweist, eine zweite Spannung an eine zweite Anzahl von Stromleitungen in dem ersten Untersystem des Anhängers anzulegen und die Gesamtspannung in der zweiten Anzahl von Stromleitungen mit einem Vergleich der Gesamtspannung in der zweiten Anzahl von Stromleitungen mit einem zweiten Grenzwert zu messen und eine Entscheidung zu treffen, zu bestimmen, welche Art von Anhänger, wenn vorhanden, mit dem Fahrzeug verbunden ist, wobei die Entscheidung auf den gemessenen Stromstärken basiert.

8. Verfahren nach Anspruch 7, bei dem die zweite Spannung nur dann angelegt wird, wenn die einzelnen Stromstärken, die von den Komponenten in dem zweiten Untersystem verbraucht werden, unter der Höhe des ersten vorher festgelegten Grenzwertes liegen.

9. Verfahren nach Anspruch 8, bei dem die zweite Spannung bei jeder der einzelnen Komponenten in dem Untersystem angelegt wird.

10. Verfahren nach Anspruch 8, bei dem die zweite Spannung bei mindestens einer Gruppe von Komponenten in dem Untersystem angelegt wird.

11. Verfahren nach Anspruch 7, bei dem die erste Spannung auch als zweite Spannung eingesetzt wird, wobei die zweite Anzahl von Stromleitungen die Gesamtanzahl von Stromleitungen des Untersystems ist.

12. Verfahren nach einem der Ansprüche 7 bis 11, bei welchem das Untersystem, das eingesetzt wird, das Lichtsystem des Anhängers ist.

## Revendications

1. Dispositif (200, 300, 400) pour détecter la présence et le type d'une remorque qui peut avoir été reliée à un véhicule, ledit dispositif comportant des moyens pour appliquer une première tension à une première quantité de lignes d'alimentation d'énergie (121, 122, 123, 124, 125) pour un premier sous-système de la remorque et des moyens pour mesurer les courants individuels (i₁, i₂, i₃, i₄, i₅) consommés par des composants (111, 112, 113, 114, 115) dudit premier sous-système, incluant des moyens pour comparer le niveau desdits courants individuels à un premier seuil prédéfini, **caractérisé en ce que** le dispositif comporte de plus des moyens pour appliquer une seconde tension (310 ; 311, 312, 313, 314, 315) à une seconde quantité de lignes d'alimentation d'énergie du premier sous-système de la remorque, et également des moyens (310) pour mesurer le courant total dans ladite seconde quantité de lignes d'alimentation d'énergie, avec des moyens pour comparer le courant total dans la seconde quantité de lignes d'alimentation d'énergie à un second seuil, et des moyens de prise de décision adaptés pour décider quel type de remorque, s'il y en a une, qui est relié au véhicule, sur la base desdits courants mesurés.

2. Dispositif selon la revendication 1, dans lequel les moyens pour appliquer la seconde tension (310, 410) sont uniquement activés si le courant individuel consommé par les composants du premier sous-système est au-dessous du niveau dudit premier seuil prédéfini.

3. Dispositif selon la revendication 2, dans lequel les moyens (310) pour appliquer la seconde tension appliquent ladite seconde tension à chacun des composants individuels (111, 112, 113, 114, 115) du sous-système.

4. Dispositif selon la revendication 2, dans lequel les moyens (410, 411) pour appliquer la seconde tension appliquent ladite seconde tension à au moins un groupe de composants du sous-système.

5. Dispositif (200) selon la revendication 1, dans lequel l'application de la première tension est également utilisée en tant que ladite seconde tension, la seconde quantité de lignes d'alimentation d'énergie étant égale à la quantité totale de lignes d'alimentation d'énergie du sous-système.

6. Dispositif selon l'une quelconque des revendications précédentes, dans lequel le sous-système qui est utilisé est le système de feux de la remorque.

7. Procédé pour détecter la présence et le type d'une remorque qui peut avoir été reliée à un véhicule, ledit procédé comportant l'étape consistant à appliquer une première tension à une première quantité de lignes d'alimentation d'énergie pour un premier sous-système de la remorque et mesurer les courants individuels consommés par des composants dudit premier sous-système, incluant de plus l'étape consistant à comparer le niveau desdits courants individuels à un premier seuil prédéfini, **caractérisé en ce que** le procédé comporte de plus l'étape consistant à appliquer une seconde tension à une seconde quantité de lignes d'alimentation d'énergie du premier sous-système de la remorque, et mesurer le courant total dans ladite seconde quantité de lignes d'alimentation d'énergie, avec une comparaison du courant total dans la seconde quantité de lignes d'alimentation d'énergie à un second seuil, et prendre une décision pour décider quel type de remorque, s'il y en a une, qui est relié au véhicule, ladite décision étant basée sur lesdits courants mesurés.

8. Procédé selon la revendication 7, selon lequel la seconde tension est uniquement appliquée si le courant individuel consommé par les composants du premier sous-système est au-dessous du niveau dudit premier seuil prédéfini.

9. Procédé selon la revendication 8, selon lequel la seconde tension est appliquée à chacun des composants individuels du sous-système.

10. Procédé selon la revendication 8, selon lequel ladite seconde tension est appliquée à au moins un groupe de composants du sous-système.

11. Procédé selon la revendication 7, selon lequel la première tension est également utilisée en tant que ladite seconde tension, la seconde quantité de lignes d'alimentation d'énergie étant la quantité totale de lignes d'alimentation d'énergie du sous-système.

12. Procédé selon l'une quelconque des revendications 7 à 11, dans lequel le sous-système qui est utilisé est le système de feux de la remorque.
